# EUROPEAN PATENT SPECIFICATION

(11) **EP 2 194 090 B1**
(45) Date of publication and mention of the grant of the patent: **03.08.2016**
(21) Application number: 09177562.7
(22) Date of filing: 01.12.2009
(51) Int. Cl.: C08K 3/00, C08K 3/22, C08K 5/00, C08L 9/06, B60C 1/00, C08K 5/39, C08K 5/40, C08K 5/44

(54) **Rubber composition and pneumatic tire with low zinc content**
Kautschukzusammensetzung und Luftreifen mit niedrigem Zinkgehalt
Composition de caoutchouc et pneu avec contenu à faible teneur en zinc

(30) Priority: 04.12.2008 US 328212
(43) Date of publication of application: 09.06.2010
(73) Proprietor: The Goodyear Tire & Rubber Company, Akron, OH 44316-0001 (US)
(72) Inventor: Costantini, Nicola, 1260 Luxembourg (LU); Thielen, Georges Marcel Victor, 4995 Schouweiler (LU); Schmitz, Frank, 7782 Bissen (LU)
(74) Representative: Kutsch, Bernd

(56) References cited:
- EP-A1- 1 391 326
- EP-A1- 1 445 277
- US-A1- 2002 170 642

## Description

### Background of the Invention

Rubber compounds for use in pneumatic tire conventionally utilize a sulfur-based curing system incorporating several curatives, such as elemental sulfur or sulfur donors, accelerators, stearic acid, and zinc oxide. Recently it has become desirable to reduce the amount of zinc in rubber articles and in particular in the tire rubber. It would therefore be desirable to have a rubber compound and a pneumatic tire cured using a cure system with the potential for a reduced zinc content in the rubber composition.

Document EP-A-1 445 277 describes a rubber composition with amount of zinc of less than 0.5 phr for a tire tread and comprising a rubber component including a polybutadiene rubber and a styrene-butadiene copolymer rubber. The styrene-butadiene rubber has a content of bound styrene of 30 to 45 mass% and a content of vinyl bond of not less than 30 %. In general, the rubber compositions comprise a styrene-butadiene rubber having a content of bound styrene of 39% by mass, carbon black, a sulfenamide compound and thiuram compound as vulcanisation accelerator and 1,6-bis(N,N'-di(2-ethylhexyl)thiocarbamoyldithio)hexane.

Document EP-A-1 391 326 relates to a rubber composition for tire treads comprising a rubber component based on a styrene-butadiene rubber. The styrene-butadiene may comprise 37.9% by weight of styrene. The rubber composition further comprises 5 phr of zinc oxide, sulfenamide and secondary accelerator such as a guanidine or thiuram compound.

Finally, document US-A-2002/170642 refers to a pneumatic tire having a rubber component comprising a rubber gel and optionally another diene rubber such as a styrene-butadiene rubber comprising 5 to 50% by weight of bound styrene. The compositions comprise a rubber component, 5 phr of ZnO, sulfur, a sulfenamide compound, a guanidine compound and 1,6-bis(N,N'-dibenzyllthiocarbamoyldithio)-hexane.

### Summary of the Invention

The present invention is directed to a rubber composition according to claim 1 and to a pneumatic tire according to claim 11.

Dependent claims refer to preferred embodiments of the invention.

### Detailed Description of the Invention

In a preferred embodiment of the invention, there is disclosed a pneumatic tire comprising a ground contacting tread, the tread comprising a rubber composition comprising
a solution polymerized styrene-butadiene rubber having a bound styrene content of at least 36 percent by weight and a vinyl 1,2 content of less than 25 percent by weight;
optionally, at least one additional diene based rubber;
silica;
a sulfur donor;
a sulfenamide accelerator;
at least one secondary accelerator selected from the group consisting of guanidines, dithiocarbamates and thiurams; and
an α,ω-bis(N,N'-dihydrocarbylthiocarbamamoyldithio)alkane;
wherein the zinc content of the rubber composition is less than 0.5 parts by weight, per 100 parts by weight of elastomer (phr) as Zn metal.

The rubber composition includes a α,ω-bis(N,N'-dihydrocarbylthiocarbamamoyldithio)alkanes. In one embodiment, the α,ω-bis(N,N'-dihydrocarbylthiocarbamamoyldithio)alkane is selected from the group consisting of 1,2-bis(N,N'-dibenzylthiocarbamoyl-dithio)ethane; 1,3-bis(N,N'-dibenzylthiocarbamoyldithio)propane; 1,4-bis(N,N'-dibenzylthiocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylthiocarbamoyldithio)heptane; 1,8-bis(N,N'-dibenzylthiocarbamoyl-dithio)octane; 1,9-bis(N,N'-dibenzylthiocarbamoyldithio)nonane; and 1,10-bis(N,N'-dibenzylthiocarbamoyldithio)decane. In one embodiment, the α,ω-bis(N,N'-dihydrocarbylthiocarbamamoyldithio)alkane is 1,6-bis(N,N'-dibenzylthiocarbamoyldithio)hexane available as Vulcuren® from Bayer.

In one embodiment, the rubber composition includes a α,ω-bis(N,N'-dihydrocarbylthiocarbamamoyldithio)alkane is an amount preferably ranging from 1 to 4 phr. In one embodiment, the rubber composition includes a α,ω-bis(N,N'-dihydrocarbylthiocarbamamoyldithio)alkane is an amount preferably ranging from 1.5 to 3 phr.

Zinc is added to the rubber composition in the form of zinc oxide or other zinc salts. The zinc content of the rubber composition is relatively low, to promote improved abrasion resistance of the rubber composition. The rubber composition has a zinc content of less than 0.5 phr as zinc metal. In one embodiment, the rubber composition has a zinc content of less than 0.2 phr as zinc metal. In one embodiment, the rubber composition has a zinc content of less than 0.1 phr as zinc metal.

The rubber composition includes rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art.

The rubber composition includes a styrene-butadiene rubber having a bound styrene content of greater than 36 percent by weight. Suitable styrene-butadiene rubber includes emulsion and/or solution polymerization derived styrene/butadiene rubbers.

In one embodiment, an emulsion polymerization derived styrene/butadiene (E-SBR) may be used having a relatively conventional styrene content of greater than 36 percent bound styrene. By emulsion polymerization prepared E-SBR, it is meant that styrene and 1,3-butadiene are copolymerized as an aqueous emulsion. Such are well known to those skilled in such art.

In one embodiment, a solution polymerization prepared styrene-butadiene rubber (S-SBR) having a bound styrene content of greater than 36 percent may be used. Suitable solution polymerized styrene-butadiene rubbers may be made, for example, by organo lithium catalyzation in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are known in the art, for example as disclosed in US-B- 4,843,120; US-B- 5,137,998; US-B- 5,047,483; US-B- 5,272,220; US-B-5,239,009; US-B- 5,061,765; US-B- 5,405,927; US-B- 5;654,384; US-B- 5,620,939; US-B- 5,627,237; US-B- 5,677,402; US-B- 6,103,842; and US-B- 6,559,240. Suitable solution polymerized styrene-butadiene rubbers may be tin- or silicon-coupled, as is known in the art. In one embodiment, suitable SSBR may be at least partially silicon coupled.

Suitable solution polymerized styrene-butadiene rubber may be functionalized with one or more functional groups, including methoxysilyl groups, and the like.

The rubber composition optionally includes at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobatylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105ºC. Suitable polybutadiene rubbers are available commercially, such as Budene® 1207 from Goodyear.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 50 to 150 phr of silica. In one embodiment, from 60 to 120 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400.

Various commercially available silicas may be used, such as, only for example herein, and without limitation, silicas commercially available from PPG Industries under the Hi-Sil trademark with designations 210, 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, No 34, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including those disclosed in US-A- 6,242,534; US-A- 6,207,757; US-A- 6,133,364; US-A- 6,372,857; US-A- 5,395,891; or US-A-6,127,488, and plasticized starch composite filler including that disclosed in US-A-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z - Alk - Sₙ - Alk - Z I

in which Z is selected from the group consisting of 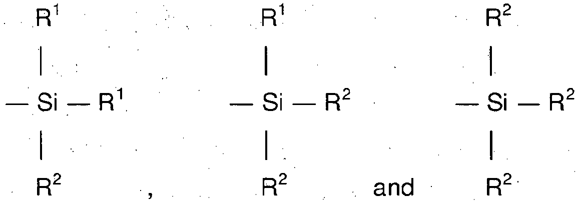 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 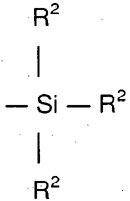 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, truck tire, and the like. In one embodiment, the tire is a passenger or truck tire. The tire may also be a radial or bias.

Vulcanization of the pneumatic tire of the present invention is generally carried out at conventional temperatures ranging from about 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, the effect of using a specific combination of curatives on the properties of cured rubber samples is illustrated. Three series of rubber compounds were prepared using a two-stage mix procedure as shown in Table 1. All samples conformed to the basic recipe of Table 1, with amounts shown in phr.

Three different styrene-butadiene rubbers were evaluated as shown in Tables 2, 3 and 4. Samples 1-4 utilized a medium styrene, high vinyl solution polymerized SBR (Table 2). Samples 5-8 utilized a high styrene, low vinyl solution polymerized SBR (Table 3). Samples 9-12 utilized a high styrene emulsion polymerized SBR. Each of the samples was evaluated for various physical properties, as shown in Tables 2, 3 and 4.

Cure properties including T₉₀, T₂₅ and T-5 were determined using a Monsanto oscillating disc rheometer (MDR). A description of oscillating disc rheometers can be found in the Vanderbilt rubber Handbook edited by Robert F. Ohm (Norwalk, Conn., R.T. Vanderbilt Company, Inc. 1990), pages 554-557. The use of this cure meter and standardized values read from the cure are specified in ASTM D-2084. A typical cure curve obtained on an oscillating disc rheometer is shown on page 55 of the 1990 edition of the Vanderbilt Rubber Handbook. The "T-points" (i.e., T₉₀, T₂₅, etc.) represent vulcanization states, are recognizable to one skilled in the art and are defined in ASTM D2084, D5289 and ISO 6502 and are fully described in a presentation given by H. G. Buhrin at Tyretech '90 in Brighton, England, Nov. 5-6 1990. T-5, or Mooney scorch, represents the time required for a five-point rise in Mooney viscosity.

**Table 1**

| Non-Productive Mix Stage | |
|---|---|
| SBR¹ | 75 |
| TDAE oil | 28.13 |
| Polybutadiene | 25 |
| Silica | 90 |
| Silane | 7.2 |

| Productive Mix Stage | |
|---|---|
| Antidegradant | 0.5 |
| Curatives | variable as per Tables 2-4 |

| | |
|---|---|
| ¹Styrene-butadiene rubber as defined in Tables 2, 3 and 4 | |

**Table 2**

| SBR: SSBR, medium styrene, high vinyl | | | | |
|---|---|---|---|---|
| Solution polymerized styrene-butadiene with 27 percent bound styrene, 43.6 percent vinyl and Tg -21.3 C. | | | | |
| Sample No. | 1 | 2 | 3 | 4 |
| ***Curatives*** | | | | |
| zinc oxide | 3 | 3 | 0.5 | 0.2 |
| sulfenamide¹ | 2.1 | 0.75 | 0.75 | 0.75 |
| sulfur | 1.9 | 0.9 | 0.9 | 0.9 |
| vulcuren² | 0 | 1.8 | 1.8 | 1.8 |
| guanidine³ | 2.1 | 2.1 | 1.5 | 1 |
| thiuram⁴ | 0 | 0.15 | 0.15 | 0.15 |

| | | | | |
|---|---|---|---|---|
| ¹ CBS (N-cyclohexyl-2-benzothiazole sulfenamide) ² 1,6-bis(N,N'-dibenzylthiocarbamoyldithio)hexane available as Vulcuren® from Bayer ³ Diphenylguanidine ⁴ Tetrabenzylthiuram disulfide | | | | |

| ***Physical Properties*** | | | | |
|---|---|---|---|---|
| Rebound 0°C | 9.0 | 9.7 | 10.2 | 10.2 |
| Rebound 23°C | 23.0 | 23.5 | 22.1 | 22.0 |
| Rebound 100°C | 54.2 | 54.1 | 53.6 | 52.4 |
| Shore A | 71 | 71 | 72 | 72 |
| RPA G' 1 % | 4.36 | 4.61 | 4.32 | 4.36 |
| Rotary Drum Abrasion (Volume Loss mm³) | 119 | 115 | 113 | 107 |
| T-5 MDR 121 °C | 38.4 | 42.5 | 26.6 | 27.8 |
| T₂₅ MDR 150°C, min | 6.3 | 7.2 | 4.9 | 5.1 |
| T₉₀ MDR 150°C, min | 17.1 | 15.9 | 9.6 | 11.0 |

| ***MDR 150°C*** | | | | |
|---|---|---|---|---|
| Min Torque, dN-m | 4.7 | 5.7 | 6.9 | 6.7 |
| Max Torque, dN-m | 22.6 | 25.7 | 25.6 | 25.0 |
| Δ Torque, dN-m | 17.9 | 20.0 | 18.7 | 18.3 |

| ***Cold Tensile D53504 S2*** | | | | |
|---|---|---|---|---|
| Elongation at break, % | 411 | 430 | 452 | 522 |
| True Tensile | 103 | 108 | 115 | 132 |
| Mod 100%, MPa | 2.8 | 2.7 | 2.8 | 2.4 |
| Mod 300%, MPa | 13.8 | 13.1 | 12.5 | 10.6 |
| Modulus Ratio | 4.9 | 4.9 | 4.4 | 4.4 |
| Tensile Strength, MPa | 20.3 | 20.3 | 20.8 | 21.3 |

**Table 3**

| SBR: SSBR, high styrene, low vinyl | | | | |
|---|---|---|---|---|
| Solution polymerized styrene-butadiene with 39 percent bound styrene, 14.1 percent vinyl and Tg -33.2 C. | | | | |
| Sample No. | 5 | 6 | 7 | 8 |
| ***Curatives*** | | | | |
| zinc oxide | 3 | 3 | 0.5 | 0.2 |
| sulfenamide¹ | 2 | 0.75 | 0.75 | 0.75 |
| sulfur | 1.9 | 0.9 | 0.9 | 0.9 |
| vulcuren² | 0 | 1.7 | 1.7 | 1.7 |
| guanidine³ | 2.6 | 2.3 | 1.6 | 1.1 |
| thiuram⁴ | 0 | 0.15 | 0.15 | 0.15 |

| | | | | |
|---|---|---|---|---|
| ¹ CBS (N-cyclohexyl-2-benzothiazole sulfenamide) ² 1,6-bis(N,N'-dibenzylthiocarbamoyldithio)hexane available as Vulcuren® from Bayer ³ Diphenylguanidine ⁴ Tetrabenzylthiuram disulfide | | | | |

| ***Physical Properties*** | | | | |
|---|---|---|---|---|
| Rebound 0°C | 9.9 | 10.0 | 10.9 | 10.7 |
| Rebound 23°C | 24.9 | 24.2 | 23.5 | 23.4 |
| Rebound 100°C | 55.4 | 55.0 | 53.0 | 51.9 |
| Shore A | 74 | 74 | 75 | 72 |
| RPA G' 1 % | 5.86 | 5.39 | 4.88 | 4.84 |
| Rotary Drum Abrasion (Volume Loss mm³ ) | 118 | 100 | 79 | 59 |
| T-5MDR121°C | 33.2 | 32.5 | 22.1 | 20.1 |
| T₂₅ MDR 150°C, min | 5.6 | 6.2 | 4.3 | 4.0 |
| T₉₀ MDR 150°C, min | 12.2 | 13.1 | 7.6 | 7.1 |

| ***MDR 150°C*** | | | | |
|---|---|---|---|---|
| Min Torque, dN-m | 5.9 | 6.3 | 7.1 | 7.1 |
| Max Torque, dN-m | 27.7 | 29.1 | 27.3 | 26.0 |
| Δ Torque, dN-m | 21.8 | 22.8 | 20.3 | 18.9 |

| ***Cold Tensile D53504 S2*** | | | | |
|---|---|---|---|---|
| Elongation at break, % | 463 | 455 | 533 | 579 |
| True Tensile | 128 | 122 | 150 | 153 |
| Mod 100%, MPa | 3.0 | 3.0 | 2.8 | 2.4 |
| Mod 300%, MPa | 14.0 | 13.7 | 12.1 | 10.0 |
| Modulus Ratio | 4.7 | 4.6 | 4.3 | 4.2 |
| Tensile Strength, MPa | 22.7 | 21.9 | 23.6 | 22.4 |

**Table 4**

| SBR: ESBR, high styrene | | | | |
|---|---|---|---|---|
| Emulsion polymerized styrene-butadiene with 40 percent bound styrene and Tg -36 C. | | | | |
| Sample No. | 9 | 10 | 11 | 12 |
| ***Curatives*** | | | | |
| zinc oxide | 3 | 3 | 0.5 | 0.2 |
| sulfenamide¹ | 2 | 0.75 | 0.75 | 0.75 |
| sulfur | 1.9 | 0.9 | 0.9 | 0.9 |
| vulcuren² | 0 | 1.8 | 1.8 | 1.8 |
| guanidine³ | 2.1 | 2.1 | 1.6 | 1.1 |
| thiuram⁴ | 0 | 0.15 | 0.15 | 0.15 |

| | | | | |
|---|---|---|---|---|
| ¹ CBS (N-cyclohexyl-2-benzothiazole sulfenamide) ² 1,6-bis(N,N'-dibenzylthiocarbamoyldithio)hexane available as Vulcuren® from Bayer ³ Diphenylguanidine ⁴ Tetrabenzylthiuram disulfide | | | | |

| ***Physical Properties*** | | | | |
|---|---|---|---|---|
| Rebound 0°C | 9.9 | 10.6 | 10.8 | 10.5 |
| Rebound 23°C | 20.7 | 21.0 | 21.6 | 22.2 |
| Rebound 100°C | 51.6 | 50.4 | 47.5 | 43.6 |
| Shore A | 75 | 76 | 74 | 70 |
| RPA G' 1 % | 4.73 | 4.55 | 4.46 | 4.66 |
| Rotary Drum Abrasion (Volume Loss mm³ ) | 121 | 108 | 89 | 97 |
| T-5 MDR 121 °C | 28.5 | 42.2 | 28.7 | 30.2 |
| T₂₅ MDR 150°C, min | 5.4 | 6.9 | 4.9 | 4.9 |
| T₉₀ MDR 150°C, min | 11.3 | 14.5 | 8.1 | 8.6 |

| ***MDR 150 °C*** | | | | |
|---|---|---|---|---|
| Min Torque, dN-m | 4.2 | 4.1 | 4.5 | 4.8 |
| Max Torque, dN-m | 24.0 | 25.1 | 23.1 | 22.0 |
| Δ Torque, dN-m | 19.8 | 21.0 | 18.6 | 17.2 |

| ***Cold Tensile D53504 S2*** | | | | |
|---|---|---|---|---|
| Elongation at break, % | 487 | 494 | 593 | 669 |
| True Tensile | 125 | 127 | 143 | 141 |
| Mod 100%, MPa | 2.9 | 2.8 | 2.2 | 1.8 |
| Mod 300%, MPa | 12.6 | 12.6 | 9.2 | 6.7 |
| Modulus Ratio | 4.4 | 4.4 | 4.1 | 3.7 |
| Tensile Strength, MPa | 21.2 | 21.3 | 20.6 | 18.4 |

As seen in Tables 2, 3 and 4, the samples show an improvement in abrasion as the amount of zinc oxide is reduced. In particular, Samples 5-8 utilizing the high styrene, low vinyl SSBR show an unexpected and surprising reduction in abrasion for the samples made with 0.5 and 0.2 phr of zinc oxide (Samples 7 and 8, equivalent to 0.4 and 0.16 phr as Zn metal) as compared with the sample made with 3 phr (Sample 6). The significantly higher improvement in abrasion with the high styrene, low vinyl SSBR as compared with the other SBR is illustrated in Table 5. In Table 5, a wear index is utilized to compare the abrasion results of Tables 2, 3 and 4, where the wear index is defined as the abrasion measured at 3 phr of zinc oxide divided by the measured abrasion for the sample. A lower wear index is indicative of better abrasion resistance.

**Table 5**

| | | | Wear Index at ZnO content | | |
|---|---|---|---|---|---|
| SBR | Styrene, % | Vinyl, % | 3 phr | 0.5 phr | 0.2 phr |
| SSBR | 27.3 | 43.6 | 1 | 0.98 | 0.93 |
| SSBR | 39 | 14.1 | 1 | 0.77 | 0.59 |
| ESBR | 40 | - | 1 | 0.83 | 0.9 |

## Claims

1. A rubber composition comprising:
a solution polymerized styrene-butadiene rubber having a bound styrene content of at least 36 percent by weight and a vinyl 1,2 content of less than 25 percent by weight;
silica;
a sulfur donor;
a sulfenamide accelerator;
at least one secondary accelerator selected from the group consisting of guanidines, dithiocarbamates and thiurams; and
an α,ω-bis(N,N'-dihydrocarbylthiocarbamamoyldithio)alkane;
wherein the zinc content of the rubber composition is less than 0.5 parts by weight, per 100 parts by weight of elastomer (phr) as Zn metal.

2. The rubber composition claim 1, wherein the zinc content of the rubber composition is less than 0.2 phr as Zn metal.

3. The rubber composition of claim 1, wherein the zinc content of the rubber composition is less than 0.1 phr as Zn metal.

4. The rubber composition of at least one of the previous claims further comprising at least one additional diene based rubber.

5. The rubber composition of claim 4, wherein the at least one additional diene based rubber is selected from the group consisting of natural rubber, synthetic polyisoprene, polybutadiene and SBR.

6. The rubber composition of at least one of the previous claims, wherein the sulfur donor is selected from the group consisting of elemental sulfur or free sulfur, an amine disulfide, polymeric polysulfide and sulfur olefin adducts.

7. The rubber composition of at least one of the previous claims, wherein the α,ω-bis(N,N'-dihydrocarbylthiocarbamamoyldithio)alkane is selected from the group consisting of 1,2-bis(N,N'-dibenzylthiocarbamoyl-dithio)ethane; 1,3-bis(N,N'-dibenzylthiocarbamoyldithio)propane; 1,4-bis(N,N'-dibenzylth- iocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylth- iocarbamoyldithio)heptane; 1,8-bis(N,N'-dibenzylthiocarbamoyl-dithio)octane; 1,9-bis(N,N'-dibenzylthiocarbamoyldithio)nonane; and 1,10-bis(N,N'-dibenzylthio-carbamoyldithio)decane.

8. The rubber composition of claim 7, wherein the the α,ω-bis(N,N'-dihydrocarbylthiocarbamamoyldithio)alkane is 1,6-bis(N,N'-dibenzylthiocarbamoyldithio)hexane.

9. The rubber composition of at least one of the previous claims, wherein the secondary accelerator comprises a guanidine and a thiuram.

10. The rubber composition of claim 9, wherein the secondary accelerator comprises diphenylguanidine and tetrabenzylthiuram disulfide.

11. A pneumatic tire comprising a ground contacting tread, the tread comprising a rubber composition according to one of the previous claims.

## Patentansprüche

1. Kautschukzusammensetzung, umfassend:
einen lösungspolymerisierten Styrol-Butadien-Kautschuk mit einem Gehalt an gebundenem Styrol von mindestens 36 Gewichtsprozent und einem Vinyl-1,2-Gehalt von weniger als 25 Gewichtsprozent;
Silika;
einen Schwefelspender;
einen Sulfenamidbeschleuniger;
mindestens einen sekundären Beschleuniger, ausgewählt aus der aus Guanidinen, Dithiocarbamaten und Thiuramen bestehenden Gruppe; und
ein α,ω-bis(N,N'-Dihydrocarbylthiocarbamoyldithio)alkan;
wobei der Zinkgehalt der Kautschukzusammensetzung weniger als 0,5 Gewichtsteile je 100 Gewichtsteile Elastomer (phr) als Zn-Metall beträgt.

2. Kautschukzusammensetzung nach Anspruch 1, wobei der Zinkgehalt der Kautschukzusammensetzung weniger als 0,2 phr als Zn-Metall beträgt.

3. Kautschukzusammensetzung nach Anspruch 1, wobei der Zinkgehalt der Kautschukzusammensetzung weniger als 0,1 phr als Zn-Metall beträgt.

4. Kautschukzusammensetzung nach mindestens einem der vorhergehenden Ansprüche, weiter mindestens einen zusätzlichen dienbasierten Kautschuk umfassend.

5. Kautschukzusammensetzung nach Anspruch 4, wobei der mindestens eine zusätzliche dienbasierte Kautschuk aus der aus Naturkautschuk, synthetischem Polyisopren, Polybutadien und SBR bestehenden Gruppe ausgewählt ist.

6. Kautschukzusammensetzung nach mindestens einem der vorhergehenden Ansprüche, wobei der Schwefelspender aus der aus elementarem Schwefel oder freiem Schwefel, einem Amindisulfid, polymerem Polysulfid und Schwefelolefinaddukten bestehenden Gruppe ausgewählt ist.

7. Kautschukzusammensetzung nach mindestens einem der vorhergehenden Ansprüche, wobei das α,ω-bis(N,N'-Dihydrocarbylthiocarbamoyldithio)alkan aus der Gruppe ausgewählt ist, bestehend aus 1,2-bis(N,N'-Dibenzylthiocarbamoyldithio)ethan; 1,3-bis(N,N'-Dibenzylthiocarbamoyldithio)propan; 1,4-bis(N,N'Dibenzylthiocarbamoyldithio)butan; 1,5-bis(N,N`-Dibenzylthiocarbamoyldithio)pentan; 1,6-bis(N,N'-Dibenzylthiocarbamoyldithio)hexan; 1,7-bis(N,N'-Dibenzylthiocarbamoyldithio)heptan; 1,8-bis(N,N`-Dibenzylthiocarbamoyldithio)octan; 1,9-bis(N,N'-Dibenzylthiocarbamoyldithio)nonan; und 1,10-bis(N,N'-Dibenzylthiocarbamoyldithio)decan.

8. Kautschukzusammensetzung nach Anspruch 7, wobei das α,ω-bis(N,N'-Dihydrocarbylthiocarbamoyldithio)alkan 1,6-bis(N,N'-Dibenzylthiocarbamoyldithio)-hexan ist.

9. Kautschukzusammensetzung nach mindestens einem der vorhergehenden Ansprüche, wobei der sekundäre Beschleuniger ein Guanidin und ein Thiuram umfasst.

10. Kautschukzusammensetzung nach Anspruch 9, wobei der sekundäre Beschleuniger Diphenylguanidin und Tetrabenzylthiuramdisulfid umfasst.

11. Luftreifen, umfassend eine mit dem Boden in Kontakt kommende Lauffläche, wobei die Lauffläche eine Kautschukzusammensetzung gemäß einem der vorhergehenden Ansprüche umfasst.

## Revendications

1. Composition de caoutchouc comprenant :
un caoutchouc de styrène-butadiène polymérisé en solution possédant une teneur en styrène lié d'au moins 36 % en poids et une teneur en groupes vinyle aux positions 1,2 inférieure à 25 % en poids ;
de la silice ;
un donneur de soufre ;
un accélérateur à base de sulfénamide ;
au moins un accélérateur secondaire choisi parmi le groupe constitué par des guanidines, des dithiocarbamates et des thiurames ; et
un α,ω-bis(N,N'-dihydrocarbylthiocarbamoyldithio)alcane ;
dans laquelle la teneur en zinc de la composition de caoutchouc est inférieure à 0,5 partie en poids par 100 parties en poids d'élastomère (phr) sous la forme d'un métal de Zn.

2. Composition de caoutchouc selon la revendication 1, dans laquelle la teneur en zinc de la composition de caoutchouc est inférieure à 0,2 phr sous la forme d'un métal de Zn.

3. Composition de caoutchouc selon la revendication 1, dans laquelle la teneur en zinc de la composition de caoutchouc est inférieure à 0,1 phr sous la forme d'un métal de Zn.

4. Composition de caoutchouc selon au moins une des revendications précédentes, comprenant en outre au moins un caoutchouc supplémentaire à base diénique.

5. Composition de caoutchouc selon la revendication 4, dans laquelle ledit au moins un caoutchouc supplémentaire à base diénique choisi parmi le groupe constitué par le caoutchouc naturel, du polyisoprène synthétique, du polybutadiène et du caoutchouc SBR.

6. Composition de caoutchouc selon au moins une des revendications précédentes, dans laquelle le donneur de soufre choisi parmi le groupe constitué par le soufre élémentaire ou le soufre libre, un disulfure d'amine, un polysulfure polymère et des adduits de soufre-oléfine.

7. Composition de caoutchouc selon au moins une des revendications précédentes, dans laquelle le α,ω-bis(N,N'-dihydrocarbylthiocarbamoyldithio)alcane est choisi parmi le groupe constitué par le 1,2-bis(N,N'-dibenzylthiocarbamoyldithio)éthane ; le 1,3-bis(N,N'-dibenzylthiocarbamoyldithio)propane ; le 1,4-bis(N,N'-dibenzylthiocarbamoyldithio)butane ; le 1,5-bis(N,N'-dibenzylthiocarbamoyldithio)pentane ; le 1,6-bis(N,N'-dibenzylthiocarbamoyldithio)hexane ; le 1,7-bis(N,N'-dibenzylthiocarbamoyldithio)heptane ; le 1,8-bis(N,N'-dibenzylthiocarbamoyldithio)octane ; le 1,9-bis(N,N'-dibenzylthiocarbamoyldithio)nonane; et le 1,10-bis(N,N'-dibenzylthiocarbamoyldithio)décane.

8. Composition de caoutchouc selon la revendication 7, dans laquelle le α,ω-bis(N,N'-dihydrocarbylthiocarbamoyldithio)alcane est le 1,6-bis(N,N'-dibenzylthiocarbamoyldithio)hexane.

9. Composition de caoutchouc selon au moins une des revendications précédentes, dans laquelle l'accélérateur secondaire comprend une guanidine et un thiurame.

10. Composition de caoutchouc selon la revendication 7, dans laquelle l'accélérateur secondaire comprend de la diphénylguanidine et du disulfure de tétrabenzylthiurame.

11. Bandage pneumatique comprenant une bande de roulement de mise en contact avec le sol, la bande de roulement comprenant une composition de caoutchouc selon l'une quelconque des revendications précédentes.
